# EUROPÄISCHE PATENTSCHRIFT

(11) **EP 0 806 600 B1**
(45) Veröffentlichungstag und Bekanntmachung des Hinweises auf die Patenterteilung: **14.11.2001**
(21) Anmeldenummer: 97105902.7
(22) Anmeldetag: 10.04.1997
(51) Int. Cl.: F16L 59/02, F16L 59/12, F16L 59/04

(54) **Verfahren zur Herstellung eines isolierten Leitungsrohrs und isoliertes Leitungsrohr**
Process for manufacturing an insulated conduit element and insulated conduit element
Procédé pour la fabrication d'un élément de conduite isolé et élément de conduite isolé

(30) Priorität: 10.05.1996 DE 19618835
(43) Veröffentlichungstag der Anmeldung: 12.11.1997
(73) Patentinhaber: KM Europa Metal Aktiengesellschaft, D-49023 Osnabrück (DE)
(72) Erfinder: Reiter, Ulrich, Dr.-Ing., 49080 Osnabrück (DE); Melcher, Walter, Dipl.-Ing., 49545 Tecklenburg (DE)

(56) Entgegenhaltungen:
- DE-A- 3 936 227
- DE-A- 4 038 400
- GB-A- 1 277 865
- GB-A- 1 522 455
- US-A- 5 444 101

## Beschreibung

Die Erfindung betrifft einerseits ein Verfahren zur Herstellung eines isolierten Leitungsrohrs gemäß den Merkmalen im Oberbegriff des Anspruchs 1 und andererseits ein isoliertes Leitungsrohr gemäß den Merkmalen im Oberbegriff des Anspruchs 7.

Zur Isolierung von Leitungsrohren, insbesondere zur Wärme- bzw. Kälteisolation, aber auch zur Schalldämmung, werden diese mit einer Dämmschicht aus aufgeschäumtem Kunststoff ummantelt. Hierbei findet in der Regel ein Kunststoff auf Polyurethanbasis Anwendung.

Bei der Herstellung wird auf ein Rohr eine Abstandshalterwendel aufgebracht und mit einer Außenhülle aus einem Kunststoffband versehen. Der Ringraum zwischen dem Innenrohr und der Außenhülle wird dann mit Kunststoffschaum ausgefüllt. Während des Aufschäumens wird das Leitungsrohr durch eine Kalibriervorrichtung geführt und so von außen gestützt, bis der Aufschäumvorgang beendet ist.

Ein solches Leitungsrohr und das zu seiner Herstellung benutzte Verfahren zählt durch die DE 32 42 047 C2 zum Stand der Technik.

Das bekannte Verfahren hat sich betriebstechnisch bewährt. Nachteilig ist jedoch, daß zur Herstellung einer stabilen beständigen Dämmschicht mit guten Isoliereigenschaften fluorchlorkohlenwasserstoffhaltige Treibmittel für den Polyurethanschaumstoff benutzt werden müssen. Der Einsatz von Fluorkohlenwasserstoff (FCKW) begegnet jedoch insbesondere wegen seiner die Ozonschicht zerstörenden Wirkung aus Umweltgesichtspunkten Bedenken. Von daher ist man bestrebt, diesen Stoff durch umweltfreundlichere Lösungen zu substituieren.

In diesem Zusammenhang zählt durch die EP 0 634 602 A1 ein wärmeisoliertes Leitungsrohr zum Stand der Technik, bei dem die Dämmschicht aus CO₂-getriebenem oder einem mit teilhalogeniertem Kohlenwasserstoff getriebenem Polyurethanschaum besteht.

Die Herstellung eines solchen Leitungsrohrs ist jedoch aufwendig, da eine feste mechanische Verklammerung des Innenrohrs und der Außenhülle mit der Dämmschicht erforderlich ist, um den Verbund zwischen Innenrohr, Schaum und Außenrohr über einen längeren Zeitraum aufrechtzuerhalten. Dementsprechend müssen die mit dem Polyurethanschaum in Kontakt tretenden Oberflächen derart strukturiert werden, daß eine mechanische Verklammerung mit der Dämmschicht eintritt. Zusätzlich müssen die Enden jeder Rohrlänge abgedichtet werden, um ein Ausdiffundieren des Treibmittels zu unterbinden.

Nachteilig ist weiterhin, daß auch die teilhalogenierten Ersatzstoffe als nicht vollkommen unschädlich und damit als umweltproblematisch gelten.

Bei Verwendung eines CO₂-getriebenen Polyurethanschaums sind dagegen die erreichbaren Dämmwerte unbefriedigend.

Muß die Ummantelung aus einsatztechnischen Gründen bereichsweise entfernt werden, beispielsweise zur Herstellung eines Abgangs im Leitungsnetz, ist dies aufwendig und umständlich. Zur Ablösung des fest anhaftenden Polyurethanschaums vom Innenrohr müssen dann Lösungsmittel eingesetzt werden, welche wiederum teilweise umweltbelastende Bestandteile aufweisen.

Schließlich offenbart die GB-A-1 522 455 ein Verfahren zur Herstellung eines isolierten Leitungsrohrs, bei dem auf ein Innenrohr aus Kupfer unter Eingliederung eines Abstandshalters eine Außenhülse angeordnet und der Ringraum zwischen dem Innenrohr und der Außenhülse mit einer Dämmschicht aus aufgeschäumtem Kunststoff ausgefüllt wird. Die Außenfläche des Innenrohrs wird mit einer die Haftung zwischen Innenrohr und Dämmschicht vermeidenden Trennschicht aus Papier versehen. Hierdurch kann die innige Haftung zwischen Dämmschicht und Innenrohr vermieden werden, was die bereichsweise Entfernung der Ummantelung erleichtert. Nachteilig hieran ist aber zunächst ebenfalls der Einsatz von fluorchlorkohlenwasserstoffhaltigen Treibmitteln. Unvorteilhaft ist aber auch die Trennschicht aus Papier, welche beim Herstellen des Leitungsrohrs um das Innenrohr gewickelt wird. Durch den Wickelspalt entlang der Ränder des Papierstrejfens kann Schaum eindringen. Möglich ist es auch, daß der Schaum die Papierschicht anweicht. Femer kann das Papier beim Umwickeln im Fertigungsprozeß durchreißen, was stets zu nachteiligen Stillständen führt.

Der Erfindung liegt die Aufgabe zugrunde, das eingangs beschriebene Herstellungsverfahren derart zu modifizieren, daß auf den Einsatz von umweltschädigenden Stoffen als Treibmittel verzichtet werden kann und eine Rationalisierung und Leistungssteigerung erreicht wird. Weiterhin zielt die Erfindung auf ein umweltfreundlich hergestelltes Leitungsrohr ab mit einer qualitativ hochwertigen Isolierung, welches anwendungstechnisch günstige Eigenschaften aufweist.

Die Lösung des verfahrensmäßigen Teils dieser Aufgabe besteht in den im Kennzeichen des Anspruchs 1 aufgeführten Merkmalen. Die Lösung des gegenständlichen Teils der Aufgabe ist in den kennzeichnenden Merkmalen des Anspruchs 7 zu sehen.

Das erfindungsgemäße Verfahren geht von einem Innenrohr aus, welches aus Kunststoff, Metall oder Leichtmetall bestehen kann. Vorzugsweise kommt ein Kupferrohr zum Einsatz. Das Innenrohr wird mit einer Trennschicht aus wasserlöslichem Wachs versehen, welche das Anhaften der durch Aufschäumen von Kunststoff hergestellten Dämmschicht vermeidet. Die Trennschicht ist wesentlich, um ein Verkleben der Dämmschicht mit dem Innenrohr zu unterbinden. Damit verbindet sich der weitere Vorteil, daß die Ummantelung später, falls dies bei der Verarbeitung bzw. Verlegung eines Leitungsrohrs erforderlich wird, bereichsweise leicht entfernen läßt, ohne auf schädliche Lösungsmittel zurückgreifen zu müssen.

Zur Aufschäumung der Dämmschicht kommt ein fluorchlorkohlenwasserstofffreies Treibmittel zur Anwendung. Auf umweltschädigende Stoffe, wie FCKW oder teilhalogenierte Treibmittel wird bei der Herstellung der Dämmschicht verzichtet. Trotzdem gewährleistet die Erfindung die Herstellung eines qualitativ hochwertigen isolierten Leitungsrohrs, dessen Dämmschicht eine geringe Wärmeleitfähigkeit aufweist. Die Dämmschicht ist standfest und alterungsbeständig. Auch bleibt die Flexibilität und Biegbarkeit des Leitungsrohrs erhalten.

Ein solches Rohr ist für den Trinkwasser- und Heizungsbereich ebenso geeignet wie für den Einsatz im Industriebereich zum Transport von Wärme- oder Kältemedien. Da der die Dämmschicht bildende Polyurethanschaum FCKW- und halogenfrei hergestellt ist, kann er später auch problemlos entsorgt werden.

In Abhängigkeit von den Qualitätsanforderungen an die Dämmschicht hinsichtlich der Wärmeleitfähigkeit und der Wärmestandfestigkeit sieht die Erfindung die Verwendung unterschiedlicher umweltfreundlicher Treibmittel vor.

Bei geringeren Qualitätsanforderungen kommen nach den Merkmalen des Anspruchs 2 Kohlenwasserstoffe, wie z.B. Pentane oder Butane, zum Einsatz. Die als Treibmittel eingesetzte chemische Verbindung besteht nur aus den Elementen Kohlenstoff und Wasserstoff in einer Zusammensetzung, die bei Raumtemperatur und Atmosphärendruck gasförmig ist.

Hingegen wird bei höheren Qualitätsansprüchen das durch Anspruch 3 aufgezeigte Cyclopentan verwendet.

Als besonders günstig haben sich auch Gemische aus etwa 50 % Cyclopentan und etwa 50 % Isopentan erwiesen (Anspruch 4). Diese Gemische wirken sich positiv auf die Zellstruktur des Kunststoffschaums sowie auf die Schrumpfneigung bzw. das Schrumpfverhalten und die Wärmeleitfähigkeit aus.

Das Mischungsverhältnis der beiden Gemischanteile Cyclopentan bzw. Isopentan kann jeweils geringfügig um bis zu ± 5 % variieren, wobei die positiven Eigenschaften des Treibmittels erhalten bleiben.

Bei noch höheren Qualitätsansprüchen kommt nach den Merkmalen des Anspruchs 5 Edelgas als Treibmittel zur Anwendung. Es hat sich gezeigt, daß hierzu Edelgase mit einer Wärmeleitfähigkeit λ kleiner als 0,01 W/m·K geeignet sind. Praktisch bietet sich daher der Einsatz von Krypton oder Xenon an.

Durch das erfindungsgemäße Verfahren ist es gelungen, ein biegbares werksseitig isoliertes Leitungsrohr herzustellen, in dessen Herstellungsprozeß auf den Einsatz von umweltschädlichen Treibmitteln verzichtet werden kann, welches trotzdem sehr gute Dämmeigenschaften besitzt und auch anwendungstechnisch durch die leichte Abmantelung verbessert ist. Darüber hinaus ist die Fertigung der Leitungsrohre wirtschaftlich möglich.

Das erfindungsgemäße isolierte Leitungsrohr ist gegenständlich in den Merkmalen des Anspruchs 7 charakterisiert.

Wichtig ist in der Kombination mit der Dämmschicht aus FCKW-frei getriebenem Polyurethanschaum die Trennschicht aus wasserlöslichem Wachs zwischen Innenrohr und Dämmschicht, um die anwendungstechnischen Vorteile zu erhalten.

In Abhängigkeit von der Härte des Innenrohrs wird das Verhältnis der beiden zur Herstellung des Polyurethanschaums benötigten Komponenten Polyol und lsocyanat gezielt auf die gewünschte bzw. erforderliche Stabilität und Flexibilität des Schaums eingestellt. So erhält man einen geschlossenzelligen Polyurethanschaum, der so eingestellt ist, daß sich das gesamte isolierte Leitungsrohr gut biegen läßt, wobei sichergestellt ist, daß die Dämmschicht beim Biegen weder brüchig wird noch einreißt.

Gemäß den Merkmalen des Anspruchs 8 ist die Außenhülle von einer Folie aus einem thermoplastischen Kunststoff gebildet. Durch die Verwendung dieses Kunststoffs wird eine geschmeidige Außenhülle gewährleistet. Das isolierte Leitungsrohr läßt sich gut biegen, ohne daß die Außenhülle einreißt. Gleichzeitig gewährleistet die Außenhülle eine gute Fixierung der Dämmschicht während des Aufschäumvorgangs.

Falls erforderlich, kann die Außenhülle im Herstellungsprozeß von außen so lange gestützt werden, bis der Aufschäumvorgang beendet ist. Hierzu kann die bekannte Kalibriervorrichtung in Form einer langgestreckten Drahtwendel eingesetzt werden, durch die das ummantelte Innenrohr geführt wird: Die lichte Weite der Kalibriervorrichtung entspricht dabei dem Außendurchmesser des fertig isolierten Leitungsrohrs. Hierbei wird der innere Schaumdruck durch die Kalibriervorrichtung aufgefangen.

Eine besonders vorteilhafte Ausführungsform des erfindungsgemäßen isolierten Leitungsrohrs wird nach den Merkmalen des Anspruchs 9 darin gesehen, daß die Außenhülle von einer Folie aus einem gegenüber einem zur Aufschäumung des Polyurethan benutzten Treibmittels und/oder Wasserdampf diffusionsdichten Material besteht. Gut geeignet sind hierfür metallische Folien, insbesondere Aluminiumfolien. Auch Kunststoffverbundfolien können als Außenhülle eingesetzt werden.

Zur Schaffung des die Dämmschicht aufnehmenden Ringraums zwischen Innenrohr und Außenhülle kommt ein Abstandshalter zum Einsatz, der nach den Merkmalen des Anspruchs 10 von einer Schaumstoffwendel gebildet ist, die ebenfalls aus fluorchlorkohlenwasserstofffrei getriebenem Polyurethanschaum besteht. Grundsätzlich kann auch eine Papierkordel zum Einsatz gelangen. So wird ein isoliertes Leitungsrohr geschaffen, bei dessen Herstellung auf umweltschädliche Stoffe verzichtet werden kann. Dementsprechend kann ein solches Leitungsrohr später auch umweltfreundlich entsorgt werden.

Die erfindungswesentlichen Vorteile lassen sich durch die Dämmschicht aus FCKW-frei aufgeschäumtem Kunststoff auf der Basis von Polyurethan charakterisieren, welcher gute Dämmeigenschaften aufweist. Durch eine entsprechende Abstimmung der Rezeptur der Dämmschicht kann die Wärmeleitfähigkeit reduziert, die Wärmestandfestigkeit gegenüber CO₂-getriebenem Polyurethanschaum verbessert und die Flexibilität der Isolierung erhöht werden. Da kein FCKW verwendet wird, kann der Polyurethanschaum auch problemlos entsorgt werden. Anwendungstechnisch weist das isolierte Leitungsrohr zusätzlich den Vorteil auf, daß sich die Ummantelung bedarfsgerecht ohne großen Aufwand und dem Einsatz chemischer Lösungsmittel wieder entfernen läßt.

## Patentansprüche

1. Verfahren zur Herstellung eines isolierten Leitungsrohrs, bei dem auf ein Innenrohr unter Eingliederung mindestens eines Abstandshalters eine Außenhülle angeordnet und der Ringraum zwischen dem Innenrohr und der Außenhülle mit einer Dämmschicht aus aufgeschäumtem Kunststoff auf der Basis von Polyurethan ausgefüllt wird, **dadurch gekennzeichnet, daß** die Außenfläche des Innenrohrs mit einer die Haftung zwischen Innenrohr und Dämmschicht vermeidenden Trennschicht aus wasserlöslichem Wachs versehen und zur Aufschäumung der Dämmschicht ein fluorchlorkohlenwasserstofffreies Treibmittel verwendet wird.

2. Verfahren nach Anspruch 1, **dadurch gekennzeichnet, daß** als Treibmittel Kohlenwasserstoffe, insbesondere Pentane oder Butane, verwendet werden.

3. Verfahren nach Anspruch 1 oder 2, **dadurch gekennzeichnet, daß** als Treibmittel Cyclopentan verwendet wird.

4. Verfahren nach einem der Ansprüche 1 bis 3, **dadurch gekennzeichnet, daß** als Treibmittel ein Gemisch aus etwa 50 % Cyclopentan und etwa 50 % Isopentan verwendet wird.

5. Verfahren nach Anspruch 1, **dadurch gekennzeichnet, daß** als Treibmittel Edelgas verwendet wird.

6. Verfahren nach Anspruch 5, **dadurch gekennzeichnet, daß** das verwendete Edelgas eine Wärmeleitfähigkeit λ kleiner als 0,01 W/m·K besitzt.

7. Isoliertes Leitungsrohr, umfassend ein Innenrohr, vorzugsweise aus Kupfer, mit einer unter Eingliederung mindestens eines Abstandshalters zum Innenrohr konzentrisch angeordneten Außenhülle, wobei der Ringraum zwischen dem Innenrohr und der Außenhülle mit einer Dämmschicht aus aufgeschäumtem Kunststoff auf der Basis von Polyurethan ausgefüllt ist und die Außenfläche des Innenrohrs mit einer die Haftung zwischen Innenrohr und Dämmschicht vermeidenden Trennschicht versehen ist, **dadurch gekennzeichnet, daß** die Trennschicht aus wasserlöslichem Wachs und die Dämmschicht aus einem fluorchlorkohlenwasserstofffrei getriebenen Polyurethanschaum besteht.

8. Leitungsrohr nach Anspruch 7, **dadurch gekennzeichnet, daß** die Außenhülle von einer Folie aus einem thermoplastischen Kunststoff gebildet ist.

9. Leitungsrohr nach Anspruch 7, **dadurch gekennzeichnet, daß** die Außenhülle von einer Folie aus einem gegenüber dem Treibmittel und/oder Wasserdampf diffusionsdichten Material gebildet ist.

10. Leitungsrohr nach einem der Ansprüche 7 bis 9, **dadurch gekennzeichnet, daß** der Abstandshalter von einer Schaumstoffwendel aus fluorchlorkohlenwasserstofffrei getriebenem Polyurethanschaum gebildet ist.

## Claims

1. Method for production of an insulated conduit pipe in which an external sheath is arranged on an internal pipe, incorporating at least one spacer, and the annular space between the internal pipe and the external sheath is filled with an insulating layer made of foamed plastic based on polyurethane, **characterised in that** the external surface of the internal pipe is covered with a separating layer of water-soluble wax preventing adhesion between the internal pipe and the insulating layer, and a foaming agent free of chlorinated fluorocarbon is used to foam the insulating layer.

2. Method according to claim 1, **characterised in that** hydrocarbons, in particular pentanes or butanes, are used as foaming agent.

3. Method according to claim 1 or 2, **characterised in that** cyclopentane is used as foaming agent.

4. Method according to one of claims 1 to 3, **characterised in that** a mixture of roughly 50% cyclopentane and roughly 50% isopentane is used as foaming agent.

5. Method according to claim 1, **characterised in that** rare gas is used as foaming agent.

6. Method according to claim 5, **characterised in that** the rare gas used has a thermal conductivity λ of less than 0.01 W/m·K.

7. Insulated conduit pipe, comprising an internal pipe, preferably made of copper, with an external sheath arranged concentrically with the internal pipe incorporating at least one spacer, whereby the annular space between the internal pipe and the external sheath is filled with an insulating layer made of foamed plastic based on polyurethane and the external surface of the internal pipe is covered with a separating layer preventing adhesion between the internal pipe and the insulating layer, **characterised in that** the separating layer consists of water-soluble wax and the insulating layer consists of a polyurethane foam foamed free of chlorinated fluorocarbon.

8. Pipe according to claim 7, **characterised in that** the external sheath is formed of a sheet of a thermoplastic plastic.

9. Pipe according to claim 7, **characterised in that** the external sheath is formed of a sheet of a material proof against diffusion of the foaming agent and/or water vapour.

10. Pipe according to one of claims 7 to 9, **characterised in that** the spacer is formed by a foam helix made of polyurethane foam foamed free of chlorinated fluorocarbon.

## Revendications

1. Procédé de fabrication d'un tuyau isolé selon lequel, sur un tuyau intérieur et en intégrant au moins un organe d'écartement, on réalise une enveloppe extérieure et on remplit le volume intérieur entre le tuyau intérieur et l'enveloppe extérieure avec une couche d'isolation en mousse expansée à base de polyuréthanne,
**caractérisé en ce qu'**
on munit la surface extérieure du tuyau intérieur d'une couche de séparation en cire soluble dans l'eau pour éviter l'accrochage entre le tuyau intérieur et la couche d'isolation, et pour expanser la couche d'amortissement, on utilise un agent propulseur ne contenant pas d'hydrocarbures fluorés.

2. Procédé selon la revendication 1,
**caractérisé en ce que**
l'agent propulseur utilisé est un hydrocarbure notamment du pentane ou du butane.

3. Procédé selon la revendication 1 ou 2,
**caractérisé en ce que**
l'agent propulseur est du cyclopentane.

4. Procédé selon l'une quelconque des revendications 1 à 3,
**caractérisé en ce que**
l'agent propulseur est un mélange d'environ 50 % de cyclopentane et d'environ 50 % d'isopentane.

5. Procédé selon la revendication 1,
**caractérisé en ce que**
l'agent propulseur est un gaz rare.

6. Procédé selon la revendication 5,
**caractérisé en ce que**
le gaz rare utilisé a une conductivité thermique λ inférieure à 0,01 W/m K.

7. Tuyau isolé composé d'un tuyau intérieur de préférence en cuivre, avec une enveloppe extérieure installée sur le tuyau intérieur, concentriquement avec intégration d'au moins un organe d'écartement, le volume intérieur entre le tuyau intérieur et l'enveloppe extérieure étant rempli d'une couche d'isolation de matière plastique expansée à base de polyuréthanne et la surface extérieure du tuyau intérieur est munie d'une couche de séparation évitant l'accrochage entre le tuyau intérieur et la couche d'amortissement,
**caractérisé en ce que**
la couche de séparation est de la cire soluble dans l'eau et la couche d'isolation est une mousse de polyuréthanne gonflée sans hydrocarbures fluorés.

8. Tuyau selon la revendication 7,
**caractérisé en ce que**
l'enveloppe extérieure est formée d'une feuille de matière thermoplastique.

9. Tuyau selon la revendication 7,
**caractérisé en ce que**
l'enveloppe extérieure est formée d'une feuille d'une matière étanche à la diffusion de l'agent propulseur et/ou de vapeur d'eau.

10. Tuyau selon l'une quelconque des revendications 7 à 9,
**caractérisé en ce que**
l'organe d'écartement est formé par une spire de mousse de polyuréthanne expansée sans hydrocarbures fluorés.
